# EUROPEAN PATENT SPECIFICATION

(11) **EP 3 799 628 B1**
(45) Date of publication and mention of the grant of the patent: **26.03.2025**
(21) Application number: 18746852.5
(22) Date of filing: 13.07.2018
(51) Int. Cl.: G06F 1/16, G09F 9/30, H04M 1/02

(54) **SUPPORT ROD ASSEMBLY FOR A FOLDABLE ELECTRONIC DEVICE, AND A FOLDABLE ELECTRONIC DEVICE COMPRISING SAID SUPPORT ROD ASSEMBLY**
UNTERSTÜTZUNGSSTANGENANORDNUNG FÜR EIN FALTBARES ELEKTRONISCHES GERÄT UND EINES FALTBAREN ELEKTRONIKGERÄT MIT DIESER UNTERSTÜTZUNGSSTANGENANORDNUNG
ENSEMBLE DE SUPPORT A TIGES POUR UN DISPOSITIF ELECTRONIQUE PLIABLE, ET DISPOSITIF ELECTRONIQUE PLIABLE COMPRENANT CET ENSEMBLE DE SUPPORT

(43) Date of publication of application: 07.04.2021
(73) Proprietor: HUAWEI TECHNOLOGIES CO., LTD., Shenzhen, Guangdong 518129 (CN)
(72) Inventor: HEISKANEN, Juuso, 16440 Kista (SE)
(74) Representative: Körber, Martin Hans
(86) International application number: PCT/EP2018/069162
(87) International publication number: WO 2020/011376

(56) References cited:
- US-A1- 2009 007 379
- US-A1- 2016 147 267
- US-A1- 2018 011 515
- US-A1- 2018 088 634

## Description

### TECHNICAL FIELD

The disclosure relates to a support rod assembly comprising a support rod and at least one cam torque arrangement arranged adjacent at least one end of the support rod. The disclosure further relates to a display support assembly, comprising at least two of the support rod assemblies, and a foldable electronic device comprising the display support assembly.

The present invention provides a display support arrangement according to claim 1. Further aspects of the invention are outlined in the dependent claims. Embodiments which do not fall within the scope of the claims do not describe part of the present invention.

### BACKGROUND

The size of electronic devices, such as tablets and mobile phones, is an important consideration when designing electronic devices. The user oftentimes requests the outer dimensions of the device to be as small as possible while still providing an as large as possible display.

This problem may be solved by means of a foldable electronic device but such device are typically bulky, complex, and comparatively heavy.

Document US 2018/0088634 A1 discloses sequential multi-axis hinges that rotatably secure portions of a computing device. In particular, it discloses a set of hinges that rotate around a set of hinge shafts. Moreover, a shuttle cam through which an individual hinge shaft passes is disclosed. The shuttle cam can be configured to move orthogonally relative to the individual hinge shaft to block rotation of the individual hinge shaft or an adjacent individual hinge shaft. Document US 2009/007379 A1 discloses a hinge assembly (100) includes a main shaft (50), a fixing seat (80), a follower (44), a cam (42) and a first elastic element (30). In particular, the fixing seat is fixed with the main shaft. The follower is placed around the shaft, and the fixing seat selectively locks with the follower. The cam is placed around the shaft, and engages with the follower. The first elastic element provides an elastic force to make the cam and the follower resist each other and provides a torsional force to make the cam and the follower rotate together.

Document US 2018/011515 A1 discloses an electronic device, which includes a first housing including a first face facing in a first direction, a second housing comprising a second face facing in the first direction, a hinge assembly for coupling the first housing to the second housing such that the first housing and the second housing are folded toward each other. For allowing the first face and the second face to face each other when the first housing and the second housing are completely folded, a flexible display is disposed in at least one area of the first face and at least one area of the second face, and across the hinge assembly. Moreover, the electronic device further includes a guide member disposed in the hinge assembly which moves based on a folding motion and unfolding motion of the hinge assembly, and a drive assembly for moving the flexible display in a sliding manner in a direction opposite to a direction of the guide member on the second face.

Document US 2016/147267 A1 discloses a hinged portion including a first portion and a second portion. In particular, it discloses a sequential multi-pivot hinge assembly rotatably securing the first portion and the second portion. The sequential multi-pivot hinge assembly can include rotation control elements configured to control a relative order of rotation around axes of rotation of the sequential multi-pivot hinge assembly.

### SUMMARY

It is an object to provide an improved concept for a foldable electronic device. The foregoing and other objects are achieved by the features of the independent claims. Further implementation forms are apparent from the dependent claims, the description, and the figures. The invention is defined by the appended claims. Further aspects are provided to facilitate understanding the invention.

According to a second aspect, there is provided a display support assembly comprising at least two support rod assemblies. Each support rod assembly comprises a support rod, spring means surrounding at least a section of the support rod, a first cam torque arrangement arranged adjacent a first end of the support rod, the first cam torque arrangement comprising at least one cam torque element, a second cam torque arrangement arranged adjacent a second end of the support rod, the second cam torque arrangement comprising at least one cam torque element, each cam torque element comprising a first cam link and a second cam link.

Moreover, support rods of the support rod assemblies extend in parallel, at least one of a first cam torque element of a first support rod assembly interlocks with a first cam torque element of at least one second, neighboring support rod assembly and a second cam torque element of a first support rod assembly interlocks with a second cam torque element of at least one second, neighboring support rod assembly.

Further, at least one first cam link of a first support rod assembly and at least one second cam link of a second, neighboring support rod assembly are interconnected by means of a link pin extending in parallel with the support rods, the first cam link(s) and the second cam link(s) being arranged to at least partially pivot around the link pin, facilitating a display support assembly which has an as small width as possible while still allowing the support rod assemblies to fold the components, which the display support assembly interconnects, completely together.

Moreover, the first support rod assembly further comprises a torsion spring arranged adjacent to a side of the first cam torque arrangement that faces away from the second cam torque arrangement, wherein each respective leg of the torsion interacts with the support rod of the at least one second, neighboring support rod assembly or the link pin.

Such a solution allows for a support rod assembly which has as small outer dimensions as possible, while having a range of motion which allows, e.g., two interconnected support rod assemblies to be moved between an extended end position, in which the interconnected support rod assemblies extend to provide a maximum width, and a folded end position in which the interconnected support rod assemblies folded towards each other such that they extend to provide only a minimum electronic device width. Furthermore, the solution provides support to any components which extend across the interconnected support rod assemblies.

Moreover, such a solution allows for a display support assembly which has as small outer dimensions as possible, while having a range of motion which allows, e.g., two components interconnected by the display support assembly, such as two electronic device frame sections, to be moved between an extended end position, in which the frame sections extend to provide a maximum electronic device width, and a folded end position in which the two sections are superimposed onto each other such that they extend to provide only a minimum electronic device width. Furthermore, the solution provides support to any components which extend the two interconnected components across the display support assembly.

In a possible implementation form of the first aspect, at least one of the cam torque arrangements comprises two cam torque elements arranged adjacent one end of the support rod, facilitating an increased torque or allowing one cam torque element to provide torque for a folding action and the other cam torque element to provide torque for an unfolding action.

In a further possible implementation form of the first aspect, the spring means comprises a coil spring extending between the first cam torque arrangement and the second cam torque arrangement, allowing an as small height as possible of the support rod assembly.

In a further possible implementation form of the first aspect, the spring means comprises a coil spring extending between the two cam torque elements, allowing the support rod assembly to be reinforced along the support rod.

In a further possible implementation form of the first aspect, the spring means is arranged adjacent a side of the first cam torque arrangement which faces away from the second cam torque arrangement, allowing torque to be increased for the first cam torque arrangement but not the second cam torque arrangement.

In a further possible implementation form of the first aspect, the first cam link and the second cam link of a cam torque element are arranged to at least partially pivot around the support rod, allowing interconnected support rod assemblies to be folded together to have an as small width as possible.

In a further possible implementation form of the first aspect, at least one of a first cam link of first support rod assembly interlocks with a first cam link of second, neighboring support rod assembly, and a second cam link of first support rod assembly interlocks with a second cam link of a third, neighboring support rod assembly, by means of a stopper element protruding from one of the cam links of the first support rod assembly, a free end of the stopper element abutting with an outside of one of the cam links of the second neighboring support rod assembly or the third neighboring support rod assembly, such that the interaction between the support rod assemblies prevents the display support assembly from bending past the extended end position.

According to a second aspect, there is provided a foldable electronic device comprising at least a first frame section and a second frame section interconnected such that the first frame section and the second frame section are pivotable relative each other, the second frame section being superimposed on the first frame section when pivoted to a folded end position, a front face of the second frame section being aligned with a front face of the first frame section when pivoted to an extended end position, a display attached to the front faces of the frame sections, and a display support assembly according to the above being arranged between the first frame section and the second frame section, support rods of the display support assembly supporting the display.

A foldable electronic device provided with a display support assembly according to the present disclosure has a range of motion which allows the frame sections of the electronic device to be moved between an extended end position, in which the electronic device has a maximum width, and a folded end position in which the two sections are superimposed onto each other such that the electronic device has a minimum width. Furthermore, the solution provides support to the display which extends from one frame section to the other frame section, across the display support assembly.

In a possible implementation form of the second aspect, each support rod assembly comprises a first cam link and a second cam link, and a link pin interconnects a first cam link of a first support rod assembly with a second cam link of a second support rod assembly, the link pin being arranged such that a center axis of the support rod is always closer to the display than a center axis of the link pin, allowing the display support assembly to be folded together to have an as small width as possible, while still providing support for the display.

In a further possible implementation form of the second aspect, cam torque arrangements of neighboring support rod assemblies are adapted for maintaining the second frame section in the extended end position.

In a further possible implementation form of the second aspect, cam torque arrangements of neighboring support rod assemblies are adapted for maintaining the second frame section in the folded end position.

In a further possible implementation form of the second aspect, a frame section further comprises a locking element adapted for maintaining the second frame section in the folded end position.

This and other aspects will be apparent from the embodiments described below.

### BRIEF DESCRIPTION OF THE DRAWINGS

In the following detailed portion of the present disclosure, the aspects, embodiments, and implementations will be explained in more detail with reference to the example embodiments shown in the drawings, in which:
Fig. 1a shows a perspective view of a foldable electronic device in accordance with one embodiment of the present invention, the foldable electronic device being in an extended end position;
Fig. 1b shows the embodiment of Fig. 1a, the foldable electronic device being in a folded end position;
Fig. 2 shows a perspective view of a support rod assembly in accordance with an embodiment of the present invention;
Fig. 3 shows a perspective view of a support rod assembly in accordance with a further embodiment of the present invention;
Fig. 4a shows a perspective view of a cam torque element in accordance with an embodiment of the present invention, the cam torque links of which are in a locked position;
Fig. 4b shows a perspective view of the embodiment of Fig. 4a, the cam torque links of which are in an open position;
Fig. 5a shows a side view of a plurality of interconnected cam torque elements in accordance with an embodiment of the present invention, the cam torque elements being in an extended end position;
Fig. 5b shows the embodiment of Fig. 5a in a folded end position;
Fig. 6a shows a perspective inner view of a display support assembly in accordance with an embodiment of the present invention, the display support assembly being in an extended end position;
Fig. 6b shows a perspective outer view of the embodiment of Fig. 6a;
Fig. 7a shows a perspective, inner sectional view of a foldable electronic device in accordance with one embodiment of the present invention, the foldable electronic device being in an extended end position;
Fig. 7b shows a perspective, outer sectional view of the embodiment of Fig. 7a;
Fig. 7c shows the embodiment of Figs. 7a and 7b, the foldable electronic device being in a folded end position;
Fig. 8 shows a sectional perspective view of end of a display support assembly in accordance with one embodiment of the present invention.

### DETAILED DESCRIPTION

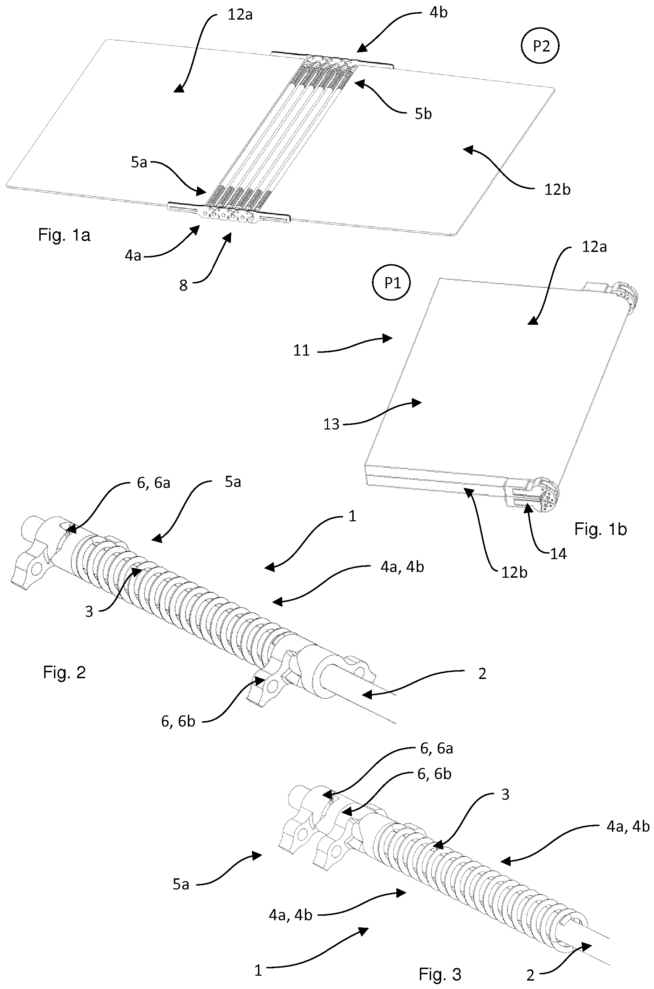

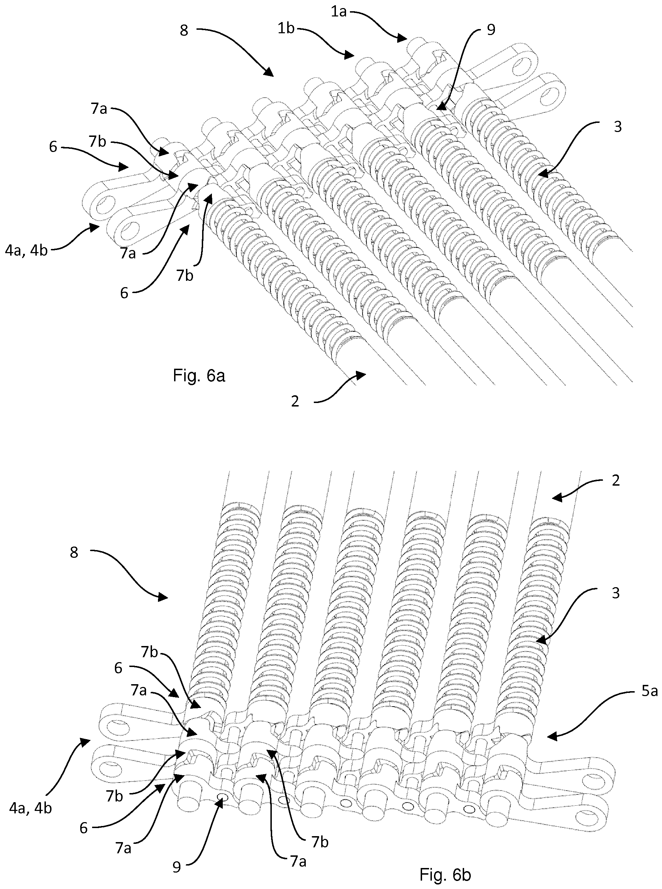

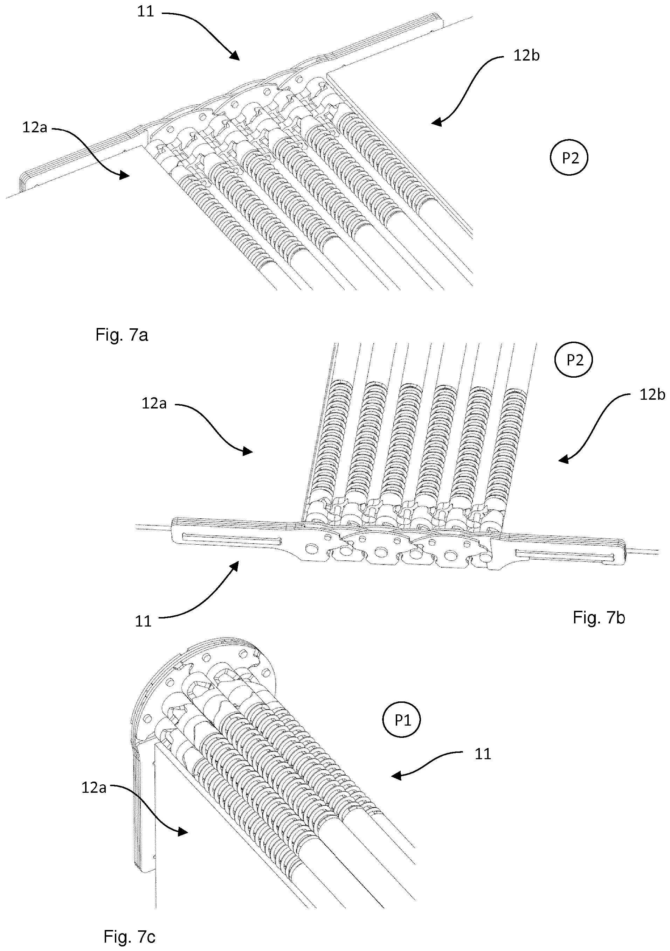

Figs. 1a and 1b show a foldable electronic device 11 comprising a first frame section 12a and a second frame section 12b. A display support assembly 8, shown more clearly in Figs. 6a-6b and 7a-7c, connects the first frame section 12a to the second frame section 12b such that the first frame section 12a and the second frame section 12b are pivotable relative each other, between a folded end position P1 and an unfolded end position P2. In the folded end position P1, shown in Fig. 1b, the second frame section 12b is superimposed on the first frame section 12a. In the unfolded end position P2, shown in Fig. 1a, the front face of the second frame section 12b is aligned with the front face of the first frame section 12a.

The foldable electronic device 11 further comprises a foldable display 13, attached to the front face of the first frame section 12a and the front face of the second frame section 12b, and extending across the display support assembly 8.

The first frame section 12a may be a hollow housing which comprises the internal components of the foldable electronic device 11, such as battery, circuit board, etc., and the second frame section 12b may be either a similar hollow housing or a solid support plate. Furthermore, the foldable electronic device 11 may comprise two second frame sections 12b, one arranged at each longitudinal edge of the first frame section 12a.

The display support assembly 8, described in more detail farther below, comprises at least one support rod assembly 1, in turn comprising a support rod 2. The support rods 2 extend in parallel with the longitudinal edges of the first frame section 12a and the second frame section 12b, when mounted in the foldable electronic device 11, and are adapted for supporting the foldable section of the electronic device 11, e.g. the foldable display 13, as it extends across the gap between the first frame section 12a and the second frame section 12b. The support rods 2 may support the display 13 directly, or support a flexible support sheet arranged to, in turn, support the foldable section of the foldable display 13.

The flexible support sheet may rest on the support rods or may enclose the support rods, in which case the support rods are either assembled separately onto the flexible support sheet or insert molded together with the flexible support sheet. The flexible support sheet is preferably made of elastomer or flexible metal.

In addition to the display support assembly 8, the first frame section 12a and the second frame section 12b are connected by means of at least one first row of hinge plates and at least one second row of hinge plates, shown in Figs. 1a-1b and 7a-7c. The second row of hinge plates is offset in relation to the first row of hinge plates such that a hinge plate of the second row only partially overlaps a hinge plate of the first row. Furthermore, each hinge plate of the second row is pivotally connected to at least one neighboring hinge plate of at least one first row by means of a pivot rod.

One end 5a, 5b of the support rod assembly 1 mentioned above is shown in more detail in Figs. 2 and 3. The two ends 5a, 5b of the support rod assembly 1 may be identical or differ in some aspect. Regardless, each support rod assembly 1 comprises a support rod 2 and spring means 3 surrounding at least a section of the support rod 2. Furthermore, each end 5a, 5b of the support rod is provided with a cam torque arrangement 4a, 4b.

A first cam torque arrangement 4a is arranged adjacent the first end 5a of the support rod 2. Correspondingly, a second cam torque arrangement 4b is arranged adjacent the second end 5b of the support rod 2. By "adjacent an end of the support rod" is meant an section of the support rod which may extend, in the direction of the center axis of the support rod, from the end surface of the support rod and up until the center point of the support rod.

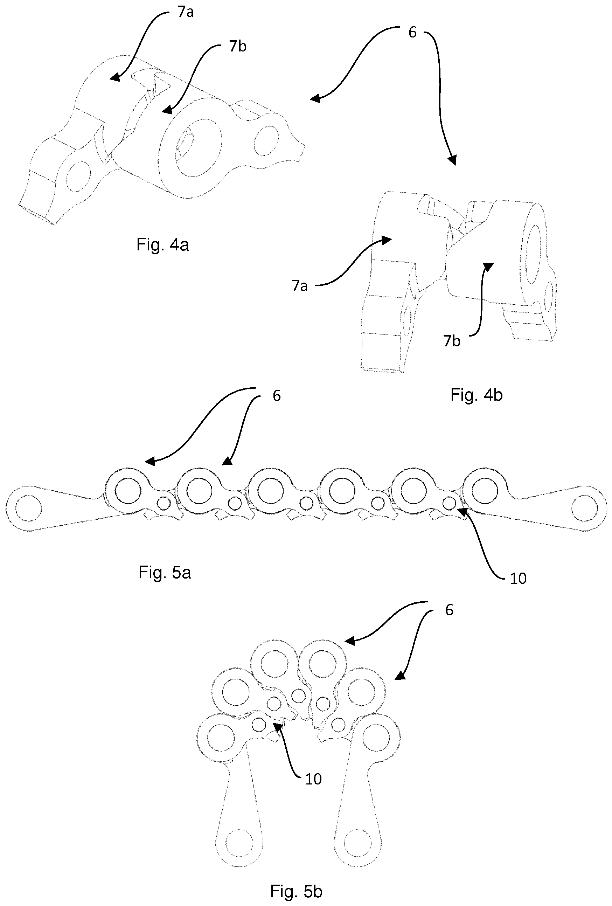

Each cam torque arrangement 4a, 4b comprises at least one cam torque element 6. The cam torque element 6 comprises a first cam link 7a and a second cam link 7b, shown in more detail in Figs. 4a and 4b. The first cam link 7a and a second cam link 7b are interconnected to lock the cam torque element 6 in at least one of two positions. The cam torque element 6 may be in a locked position, as shown in Fig 4a, or in an open position, as shown in Fig. 4b.

In one embodiment, at least one of the cam torque arrangements 4a, 4b comprises two cam torque elements 6a, 6b arranged adjacent one end 5a, 5b of the support rod 2, see Figs. 2, 3, 6a, and 6b.

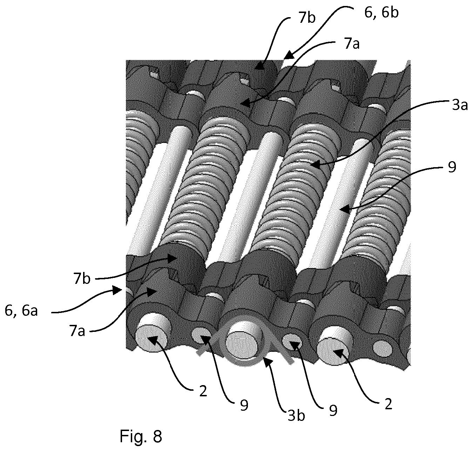

Figs. 2 and 8 show a cam torque arrangement 4a, 4b wherein the two cam torque elements 6a, 6b are arranged at a distance from each other, a spring 3 being arranged between the two cam torque elements 6a, 6b, i.e. within the cam torque arrangement 4a, 4b.

Fig. 3 shows a cam torque arrangement 4a, 4b wherein the two cam torque elements 6a, 6b are arranged in direct abutment with each other, and where the spring 3 is arranged outside, and next to, the cam torque arrangement 4a, 4b. The spring 3 extends from the first cam torque arrangement 4a or the second cam torque arrangement 4b, along the support rod 2, in a direction towards the second cam torque arrangement 4b or the first cam torque arrangement 4a.

Figs. 6a-6b and 7a-7c show embodiments wherein the spring 3 comprises a coil spring extending at least partially between the first cam torque arrangement 4a and the second cam torque arrangement 4b. In these embodiments, the support rod 2 has a center section with an enlarged diameter such that the spring extends between a cam torque arrangement 4a, 4b and the enlarged diameter center section of the support rod 2.

In one embodiment, a torsion spring 3b is arranged adjacent the side of the first cam torque arrangement 4a which faces away from the second cam torque arrangement 4b, as shown schematically in Fig. 8. Each respective leg of the torsion spring 3b may interact with a neighboring support rod 2 or a neighboring link pin 9, providing an additional unidirectional force onto the support rod or link pin, i.e. providing additional force either when the first frame section 12a and the second frame section 12b are being pivoted towards the unfolded end position P2 or when the first frame section 12a and the second frame section 12b are being pivoted towards the folded end position P1. As also shown in Fig. 8, the support rod arrangement 1 may comprise a further spring 3a, such as the above-mentioned coil spring, extending between two cam torque elements 6a, 6b.

The present disclosure relates to a display support assembly 8 comprising at least two of the above disclosed support rod assemblies 1, see Figs. 6a-6b and 7a-7c.

At least one of a first cam torque element 6a or a second cam torque element 6b of a first support rod assembly 1a interlocks with a first cam torque element 6a or a second cam torque element 6b of at least one second, neighboring support rod assembly 1b. By "neighboring" is meant directly adjacent to the left or to the right of the support rod assembly 1a.

More specifically, a first cam torque element 6a of a first support rod assembly 1a may interlock with a first cam torque element 6a of at least one second, neighboring support rod assembly 1b. Correspondingly, a second cam torque element 6b of a first support rod assembly 1a may interlock with a second cam torque element 6b of at least one second, neighboring support rod assembly 1b.

At least one first cam link 7a of the first support rod assembly 1a and at least one second cam link 7b of the second, neighboring support rod assembly 1b may be interconnected by means of a link pin 9 extending in parallel with, and in between, the support rods 2 of the first support rod assembly 1a and the second, neighboring support rod assembly 1b. The first cam link 7a and the second cam link 7b are arranged to at least partially pivot around the link pin 9.

In one embodiment, the first cam link 7a of a first support rod assembly 1a interlocks with the first cam link 7a of a second, neighboring support rod assembly 1b, and the second cam link 7b of the first support rod assembly 1a interlocks with the second cam link 7b of a third, neighboring support rod assembly 1c. The interlocking is achieved by means of a stopper element 10 protruding from one of the cam links 7a, 7b of the first support rod assembly 1a, such that a free end of the stopper element 10 abuts with an outside of one of the cam links 7a, 7b of the second neighboring support rod assembly 1b or the third neighboring support rod assembly 1c. See Figs. 5a, 6b, and 8.

As previously mentioned, the present disclosure relates to a foldable electronic device 11, shown in Figs. 1a-1b and 7a-7c, which comprises at least a first frame section 12a and a second frame section 12b interconnected such that the first frame section 12a and the second frame section 12b are pivotable relative each other.

The second frame section 12b is superimposed on the first frame section 12a when pivoted to a folded end position P1. The front face of the second frame section 12b is aligned with the front face of the first frame section 12a when pivoted to an extended end position P2. A display 13 is attached to the front faces of the frame sections 12a, 12b, and a display support assembly 8 according to the above is arranged between the first frame section 12a and the second frame section 12b, such that support rods 2 of the display support assembly 8 support the display 13.

Each support rod assembly 1 comprises a first cam link 7a and a second cam link 7b. A link pin 9 interconnects the first cam link 7a of the first support rod assembly 1a with the second cam link 7b of the second support rod assembly 1b. The link pin 9 is arranged such that a center axis of the support rod 2 is always closer to the display 13 than a center axis of the link pin 9.

Cam torque arrangements 4a, 4b of neighboring support rod assemblies 1a, 1b are adapted for maintaining the second frame section 12b in the extended end position P2, as shown in Figs. 1a and 7a-7b. The cam torque arrangements 4a, 4b of neighboring support rod assemblies 1a, 1b may further be adapted for maintaining the second frame section 12b in the folded end position P1, as shown in Figs. 1b and 7c.

At least one of the frame sections 12a, 12b may further comprise a locking element 14 adapted for maintaining the second frame section 12b in the folded end position P1, the locking element e.g. comprising a hook or a magnet.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope.

### DETAILED DESCRIPTION

Figs. 1a and 1b show a foldable electronic device 11 comprising a first frame section 12a and a second frame section 12b. A display support assembly 8, shown more clearly in Figs. 6a-6b and 7a-7c, connects the first frame section 12a to the second frame section 12b such that the first frame section 12a and the second frame section 12b are pivotable relative each other, between a folded end position P1 and an unfolded end position P2. In the folded end position P1, shown in Fig. 1b, the second frame section 12b is superimposed on the first frame section 12a. In the unfolded end position P2, shown in Fig. 1a, the front face of the second frame section 12b is aligned with the front face of the first frame section 12a.

The foldable electronic device 11 further comprises a foldable display 13, attached to the front face of the first frame section 12a and the front face of the second frame section 12b, and extending across the display support assembly 8.

The first frame section 12a may be a hollow housing which comprises the internal components of the foldable electronic device 11, such as battery, circuit board, etc., and the second frame section 12b may be either a similar hollow housing or a solid support plate. Furthermore, the foldable electronic device 11 may comprise two second frame sections 12b, one arranged at each longitudinal edge of the first frame section 12a.

The display support assembly 8, described in more detail farther below, comprises at least one support rod assembly 1, in turn comprising a support rod 2. The support rods 2 extend in parallel with the longitudinal edges of the first frame section 12a and the second frame section 12b, when mounted in the foldable electronic device 11, and are adapted for supporting the foldable section of the electronic device 11, e.g. the foldable display 13, as it extends across the gap between the first frame section 12a and the second frame section 12b. The support rods 2 may support the display 13 directly, or support a flexible support sheet arranged to, in turn, support the foldable section of the foldable display 13.

The flexible support sheet may rest on the support rods or may enclose the support rods, in which case the support rods are either assembled separately onto the flexible support sheet or insert molded together with the flexible support sheet. The flexible support sheet is preferably made of elastomer or flexible metal.

In addition to the display support assembly 8, the first frame section 12a and the second frame section 12b are connected by means of at least one first row of hinge plates and at least one second row of hinge plates, shown in Figs. 1a-1b and 7a-7c. The second row of hinge plates is offset in relation to the first row of hinge plates such that a hinge plate of the second row only partially overlaps a hinge plate of the first row. Furthermore, each hinge plate of the second row is pivotally connected to at least one neighboring hinge plate of at least one first row by means of a pivot rod.

One end 5a, 5b of the support rod assembly 1 mentioned above is shown in more detail in Figs. 2 and 3. The two ends 5a, 5b of the support rod assembly 1 may be identical or differ in some aspect. Regardless, each support rod assembly 1 comprises a support rod 2 and spring means 3 surrounding at least a section of the support rod 2. Furthermore, each end 5a, 5b of the support rod is provided with a cam torque arrangement 4a, 4b.

A first cam torque arrangement 4a is arranged adjacent the first end 5a of the support rod 2. Correspondingly, a second cam torque arrangement 4b is arranged adjacent the second end 5b of the support rod 2. By "adjacent an end of the support rod" is meant an section of the support rod which may extend, in the direction of the center axis of the support rod, from the end surface of the support rod and up until the center point of the support rod.

Each cam torque arrangement 4a, 4b comprises at least one cam torque element 6. The cam torque element 6 comprises a first cam link 7a and a second cam link 7b, shown in more detail in Figs. 4a and 4b. The first cam link 7a and a second cam link 7b are interconnected to lock the cam torque element 6 in at least one of two positions. The cam torque element 6 may be in a locked position, as shown in Fig 4a, or in an open position, as shown in Fig. 4b.

In one embodiment, at least one of the cam torque arrangements 4a, 4b comprises two cam torque elements 6a, 6b arranged adjacent one end 5a, 5b of the support rod 2, see Figs. 2, 3, 6a, and 6b.

Figs. 2 and 8 show a cam torque arrangement 4a, 4b wherein the two cam torque elements 6a, 6b are arranged at a distance from each other, a spring 3 being arranged between the two cam torque elements 6a, 6b, i.e. within the cam torque arrangement 4a, 4b.

Fig. 3 shows a cam torque arrangement 4a, 4b wherein the two cam torque elements 6a, 6b are arranged in direct abutment with each other, and where the spring 3 is arranged outside, and next to, the cam torque arrangement 4a, 4b. The spring 3 extends from the first cam torque arrangement 4a or the second cam torque arrangement 4b, along the support rod 2, in a direction towards the second cam torque arrangement 4b or the first cam torque arrangement 4a.

Figs. 6a-6b and 7a-7c show embodiments wherein the spring 3 comprises a coil spring extending at least partially between the first cam torque arrangement 4a and the second cam torque arrangement 4b. In these embodiments, the support rod 2 has a center section with an enlarged diameter such that the spring extends between a cam torque arrangement 4a, 4b and the enlarged diameter center section of the support rod 2.

In one embodiment, a torsion spring 3b is arranged adjacent the side of the first cam torque arrangement 4a which faces away from the second cam torque arrangement 4b, as shown schematically in Fig. 8. Each respective leg of the torsion spring 3b may interact with a neighboring support rod 2 or a neighboring link pin 9, providing an additional unidirectional force onto the support rod or link pin, i.e. providing additional force either when the first frame section 12a and the second frame section 12b are being pivoted towards the unfolded end position P2 or when the first frame section 12a and the second frame section 12b are being pivoted towards the folded end position P1. As also shown in Fig. 8, the support rod arrangement 1 may comprise a further spring 3a, such as the above-mentioned coil spring, extending between two cam torque elements 6a, 6b.

The present disclosure relates to a display support assembly 8 comprising at least two of the above disclosed support rod assemblies 1, see Figs. 6a-6b and 7a-7c.

At least one of a first cam torque element 6a or a second cam torque element 6b of a first support rod assembly 1a interlocks with a first cam torque element 6a or a second cam torque element 6b of at least one second, neighboring support rod assembly 1b. By "neighboring" is meant directly adjacent to the left or to the right of the support rod assembly 1a.

More specifically, a first cam torque element 6a of a first support rod assembly 1a may interlock with a first cam torque element 6a of at least one second, neighboring support rod assembly 1b. Correspondingly, a second cam torque element 6b of a first support rod assembly 1a may interlock with a second cam torque element 6b of at least one second, neighboring support rod assembly 1b.

At least one first cam link 7a of the first support rod assembly 1a and at least one second cam link 7b of the second, neighboring support rod assembly 1b may be interconnected by means of a link pin 9 extending in parallel with, and in between, the support rods 2 of the first support rod assembly 1a and the second, neighboring support rod assembly 1b. The first cam link 7a and the second cam link 7b are arranged to at least partially pivot around the link pin 9.

In one embodiment, the first cam link 7a of a first support rod assembly 1a interlocks with the first cam link 7a of a second, neighboring support rod assembly 1b, and the second cam link 7b of the first support rod assembly 1a interlocks with the second cam link 7b of a third, neighboring support rod assembly 1c. The interlocking is achieved by means of a stopper element 10 protruding from one of the cam links 7a, 7b of the first support rod assembly 1a, such that a free end of the stopper element 10 abuts with an outside of one of the cam links 7a, 7b of the second neighboring support rod assembly 1b or the third neighboring support rod assembly 1c. See Figs. 5a, 6b, and 8.

As previously mentioned, the present disclosure relates to a foldable electronic device 11, shown in Figs. 1a-1b and 7a-7c, which comprises at least a first frame section 12a and a second frame section 12b interconnected such that the first frame section 12a and the second frame section 12b are pivotable relative each other.

The second frame section 12b is superimposed on the first frame section 12a when pivoted to a folded end position P1. The front face of the second frame section 12b is aligned with the front face of the first frame section 12a when pivoted to an extended end position P2. A display 13 is attached to the front faces of the frame sections 12a, 12b, and a display support assembly 8 according to the above is arranged between the first frame section 12a and the second frame section 12b, such that support rods 2 of the display support assembly 8 support the display 13.

Each support rod assembly 1 comprises a first cam link 7a and a second cam link 7b. A link pin 9 interconnects the first cam link 7a of the first support rod assembly 1a with the second cam link 7b of the second support rod assembly 1b. The link pin 9 is arranged such that a center axis of the support rod 2 is always closer to the display 13 than a center axis of the link pin 9.

Cam torque arrangements 4a, 4b of neighboring support rod assemblies 1a, 1b are adapted for maintaining the second frame section 12b in the extended end position P2, as shown in Figs. 1a and 7a-7b. The cam torque arrangements 4a, 4b of neighboring support rod assemblies 1a, 1b may further be adapted for maintaining the second frame section 12b in the folded end position P1, as shown in Figs. 1b and 7c.

At least one of the frame sections 12a, 12b may further comprise a locking element 14 adapted for maintaining the second frame section 12b in the folded end position P1, the locking element e.g. comprising a hook or a magnet.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope.

## Claims

1. A display support assembly (8) comprising:
at least two support rod assemblies (1a, 1b), wherein each support rod assembly (1a, 1b) comprises:
- a support rod (2),
- spring means (3) surrounding at least a section of said support rod (2),
- a first cam torque arrangement (4a) arranged adjacent to a first end (5a) of said support rod (2), said first cam torque arrangement (4a) comprising at least one cam torque element (6),
- a second cam torque arrangement (4b) arranged adjacent to a second end (5b) of said support rod (2), said second cam torque arrangement (4b) comprising at least one cam torque element (6), and
- each cam torque element (6) comprising a first cam link (7a) and a second cam link (7b);
wherein support rods (2) of the at least two support rod assemblies (1a, 1b) extend in parallel,
a first cam torque element (6a) of a first support rod assembly (1a) interlocks with a first cam torque element (6a) of at least one second, neighboring support rod assembly (1b),
a second cam torque element (6b) of the first support rod assembly (1a) interlocks with a second cam torque element (6b) of the at least one second, neighboring support rod assembly (1b),
the first cam link (7a) of the first support rod assembly (1a) and the second cam link (7b) of the second, neighboring support rod assembly (1b) are interconnected by means of a link pin (9) extending in parallel with the support rods (2),
the first cam link (7a) of the first support rod assembly (1a) and the second cam link (7b) of the second, neighboring support rod assembly (1b) are arranged to at least partially pivot around said link pin (9), and
the first support rod assembly (1a) further comprises a torsion spring (3b) arranged adjacent to a side of the first cam torque arrangement (4a) that faces away from the second cam torque arrangement (4b), wherein each respective leg of the torsion spring (3b) interacts with the support rod of the at least one second, neighboring support rod assembly (1b) or the link pin (9).

2. The display support assembly (8) according to claim 1, wherein at least one of said cam torque arrangements (4a, 4b) comprises two cam torque elements (6) arranged adjacent to one end (5a, 5b) of said support rod (2).

3. The display support assembly (8) according to claim 1 or 2, wherein said spring means (3) comprises a coil spring extending between said first cam torque arrangement (4a) and said second cam torque arrangement (4b).

4. The display support assembly (8) according to claim 2, wherein said spring means (3) comprises a coil spring extending between said two cam torque elements (6).

5. The support rod assembly (1) according to claim 1, wherein said spring means (3) is arranged adjacent to a side of said first cam torque arrangement (4a) which faces away from said second cam torque arrangement (4b).

6. The support rod assembly (1) according to any one of the previous claims, wherein said first cam link (7a) and said second cam link (7b) of a cam torque element (6) are arranged to at least partially pivot around said support rod (2).

7. The display support assembly (8) according to any one of the previous claims, wherein at least one of a first cam link (7a) of the first support rod assembly (1a) interlocks with a first cam link (7a) of the second, neighboring support rod assembly (1b), and a second cam link (7b) of the first support rod assembly (1a) interlocks with a second cam link (7b) of a third, neighboring support rod assembly (1c), by means of a stopper element (10) protruding from one of said cam links (7a, 7b) of said first support rod assembly (1a), a free end of said stopper element (10) abutting with an outside of one of said cam links (7a, 7b) of said second neighboring support rod assembly (1b) or said third neighboring support rod assembly (1c).

8. A foldable electronic device (11) comprising at least a first frame section (12a) and a second frame section (12b) interconnected such that said first frame section (12a) and said second frame section (12b) are pivotable relative to each other,
said second frame section (12b) being superimposed on said first frame section (12a) when pivoted to a folded end position (P1),
a front face of said second frame section (12b) being aligned with a front face of said first frame section (12a) when pivoted to an extended end position (P2),
a display (13) attached to said front faces of said frame sections (12a, 12b), and
a display support assembly (8) according to any one of claims 1-7 being arranged between said first frame section (12a) and said second frame section (12b), support rods (2) of said display support assembly (8) supporting said display (13).

9. The foldable electronic device according to claim 8, wherein each support rod assembly (1) comprises a first cam link (7a) and a second cam link (7b), and a link pin (9) interconnects a first cam link (7a) of a first support rod assembly (1a) with a second cam link (7b) of a second support rod assembly (1b), said link pin (9) being arranged such that a center axis of said support rod (2) is always closer to said display (13) than a center axis of said link pin (9).

10. The foldable electronic device according to claim 8 or 9, wherein cam torque arrangements (4a, 4b) of neighboring support rod assemblies (1a, 1b) are adapted for maintaining said second frame section (12b) in said extended end position (P2).

11. The foldable electronic device according to any one of claims 8 to 10, wherein cam torque arrangements (4a, 4b) of neighboring support rod assemblies (1a, 1b) are adapted for maintaining said second frame section (12b) in said folded end position (P1).

12. The foldable electronic device according to any one of claims 8 to 11, wherein a frame section (12a, 12b) further comprises a locking element (14) adapted for maintaining said second frame section (12b) in said folded end position (P1).

## Patentansprüche

1. Anzeigetraganordnung (8), umfassend:
mindestens zwei Tragstangenanordnungen (1a, 1b), wobei jede Tragstangenanordnung (1a, 1b) Folgendes umfasst:
- eine Tragstange (2),
- Federmittel (3), die mindestens einen Abschnitt der Tragstange (2) umgeben,
- eine erste Nockenmomentanordnung (4a), die angrenzend an ein erstes Ende (5a) der Tragstange (2) angeordnet ist, wobei die erste Nockenmomentanordnung (4a) mindestens ein Nockenmomentelement (6) umfasst,
- eine zweite Nockenmomentanordnung (4b), die angrenzend an ein zweites Ende (5b) der Tragstange (2) angeordnet ist, wobei die zweite Nockenmomentanordnung (4b) mindestens ein Nockenmomentelement (6) umfasst, und
- jedes Nockenmomentelement (6) eine erste Nockenverbindung (7a) und eine zweite Nockenverbindung (7b) umfasst;
wobei Tragstangen (2) der mindestens zwei Tragstangenanordnungen (1a, 1b) sich parallel erstrecken,
ein erstes Nockenmomentelement (6a) einer ersten Tragstangenanordnung (1a) mit einem ersten Nockenmomentelement (6a) mindestens einer zweiten, benachbarten Tragstangenanordnung (1b) ineinandergreift,
ein zweites Nockenmomentelement (6b) der ersten Tragstangenanordnung (1a) mit einem zweiten Nockenmomentelement (6b) der mindestens einen zweiten, benachbarten Tragstangenanordnung (1b) ineinandergreift,
die erste Nockenverbindung (7a) der ersten Tragstangenanordnung (1a) und die zweite Nockenverbindung (7b) der zweiten, benachbarten Tragstangenanordnung (1b) mittels eines Verbindungsstifts (9), der sich parallel zu den Tragstangen (2) erstreckt, miteinander verbunden sind,
die erste Nockenverbindung (7a) der ersten Tragstangenanordnung (1a) und die zweite Nockenverbindung (7b) der zweiten, benachbarten Tragstangenanordnung (1b) dazu angeordnet sind, mindestens teilweise um den Verbindungsstift (9) zu schwenken, und
die erste Tragstangenanordnung (1a) ferner eine Torsionsfeder (3b) umfasst, die angrenzend an eine Seite der ersten Nockenmomentanordnung (4a) angeordnet ist, die von der zweiten Nockenmomentanordnung (4b) abgewandt ist, wobei jeder jeweilige Schenkel der Torsionsfeder (3b) mit der Tragstange der mindestens einen zweiten, benachbarten Tragstangenanordnung (1b) oder dem Verbindungsstift (9) interagiert.

2. Anzeigetraganordnung (8) nach Anspruch 1, wobei mindestens eine der Nockenmomentanordnungen (4a, 4b) zwei Nockenmomentelemente (6) umfasst, die angrenzend an ein Ende (5a, 5b) der Tragstange (2) angeordnet sind.

3. Anzeigetraganordnung (8) nach Anspruch 1 oder 2, wobei das Federmittel (3) eine Schraubenfeder umfasst, die sich zwischen der ersten Nockenmomentanordnung (4a) und der zweiten Nockenmomentanordnung (4b) erstreckt.

4. Anzeigetraganordnung (8) nach Anspruch 2, wobei das Federmittel (3) eine Schraubenfeder umfasst, die sich zwischen den zwei Nockenmomentelementen (6) erstreckt.

5. Tragstangenanordnung (1) nach Anspruch 1, wobei das Federmittel (3) angrenzend an eine Seite der ersten Nockenmomentanordnung (4a) angeordnet ist, die von der zweiten Nockenmomentanordnung (4b) abgewandt ist.

6. Tragstangenanordnung (1) nach einem der vorhergehenden Ansprüche, wobei die erste Nockenverbindung (7a) und die zweite Nockenverbindung (7b) eines Nockenmomentelements (6) dazu angeordnet sind, mindestens teilweise um die Tragstange (2) zu schwenken.

7. Anzeigetraganordnung (8) nach einem der vorhergehenden Ansprüche, wobei mindestens eine einer ersten Nockenverbindung (7a) der ersten Tragstangenanordnung (1a) mit einer ersten Nockenverbindung (7a) der zweiten, benachbarten Tragstangenanordnung (1b) ineinandergreift und eine zweite Nockenverbindung (7b) der ersten Tragstangenanordnung (1a) mit einer zweiten Nockenverbindung (7b) einer dritten, benachbarten Tragstangenanordnung (1c) mittels eines Anschlagelements (10), das von einer der Nockenverbindungen (7a, 7b) der ersten Tragstangenanordnung (1a) vorsteht, ineinandergreift, wobei ein freies Ende des Anschlagelements (10) an einer Außenseite einer der Nockenverbindungen (7a, 7b) der zweiten, benachbarten Tragstangenanordnung (1b) oder der dritten, benachbarten Tragstangenanordnung (1c) anliegt.

8. Klappbare elektronische Vorrichtung (11), umfassend mindestens einen ersten Rahmenabschnitt (12a) und einen zweiten Rahmenabschnitt (12b), die derart miteinander verbunden sind, dass der erste Rahmenabschnitt (12a) und der zweite Rahmenabschnitt (12b) relativ zueinander schwenkbar sind,
wobei der zweite Rahmenabschnitt (12b) den ersten Rahmenabschnitt (12a) überlagert, wenn er in eine zusammengeklappte Endposition (P1) geschwenkt ist,
eine Vorderseite des zweiten Rahmenabschnitts (12b) mit einer Vorderseite des ersten Rahmenabschnitts (12a) ausgerichtet ist, wenn er in eine ausgeklappte Endposition (P2) geschwenkt ist,
eine Anzeige (13), die an den Vorderseiten der Rahmenabschnitte (12a, 12b) befestigt ist, und Anzeigetraganordnung (8) nach einem der Ansprüche 1-7, die zwischen dem ersten Rahmenabschnitt (12a) und dem zweiten Rahmenabschnitt (12b) angeordnet ist, wobei Tragstangen (2) der Anzeigetraganordnung (8) die Anzeige (13) tragen.

9. Klappbare elektronische Vorrichtung nach Anspruch 8, wobei jede Tragstangenanordnung (1) eine erste Nockenverbindung (7a) und eine zweite Nockenverbindung (7b) umfasst, und ein Verbindungsstift (9) eine erste Nockenverbindung (7a) einer ersten Tragstangenanordnung (1a) mit einer zweiten Nockenverbindung (7b) einer zweiten Tragstangenanordnung (1b) verbindet, wobei der Verbindungsstift (9) derart angeordnet ist, dass eine Mittelachse der Tragstange (2) immer näher an der Anzeige (13) ist als eine Mittelachse des Verbindungsstifts (9).

10. Klappbare elektronische Vorrichtung nach Anspruch 8 oder 9, wobei Nockenmomentanordnungen (4a, 4b) benachbarter Tragstangenanordnungen (1a, 1b) dazu angepasst sind, den zweiten Rahmenabschnitt (12b) in der ausgeklappten Endposition (P2) zu halten.

11. Klappbare elektronische Vorrichtung nach einem der Ansprüche 8 bis 10, wobei Nockenmomentanordnungen (4a, 4b) benachbarter Tragstangenanordnungen (1a, 1b) dazu angepasst sind, den zweiten Rahmenabschnitt (12b) in der eingeklappten Endposition (P1) zu halten.

12. Klappbare elektronische Vorrichtung nach einem der Ansprüche 8 bis 11, wobei ein Rahmenabschnitt (12a, 12b) ferner ein Verriegelungselement (14), das zum Halten des zweiten Rahmenabschnitts (12b) in der eingeklappten Endposition (P1) angepasst ist, umfasst.

## Revendications

1. Ensemble de support d'affichage (8), comprenant :
au moins deux ensembles de tige de support (1a, 1b), dans lequel chaque ensemble de tige de support (1a, 1b) comprend :
- une tige de support (2),
- un moyen à ressort (3) entourant au moins une section de ladite tige de support (2),
- un premier agencement de couple de came (4a) agencé de manière adjacente à une première extrémité (5a) de ladite tige de support (2), ledit premier agencement de couple de came (4a) comprenant au moins un élément de couple de came (6),
- un second agencement de couple de came (4b) agencé de manière adjacente à une seconde extrémité (5b) de ladite tige de support (2), ledit second agencement de couple de came (4b) comprenant au moins un élément de couple de came (6), et
- chaque élément de couple de came (6) comprenant une première liaison de came (7a) et une seconde liaison de came (7b) ;
dans lequel les tiges de support (2) des au moins deux ensembles de tige de support (1a, 1b) se prolongent en parallèle,
un premier élément de couple de came (6a) d'un premier ensemble de tige de support (1a) s'interconnecte avec un premier élément de couple de came (6a) d'au moins un deuxième ensemble de tige de support voisin (1b),
un second élément de couple de came (6b) du premier ensemble de tige de support (1a) s'interconnecte avec un second élément de couple de came (6b) de l'au moins un deuxième ensemble de tige de support voisin (1b),
la première liaison de came (7a) du premier ensemble de tige de support (1a) et la seconde liaison de came (7b) du deuxième ensemble de tige de support voisin (1b) sont interconnectées au moyen d'une broche de liaison (9) se prolongeant parallèlement aux tiges de support (2),
la première liaison de came (7a) du premier ensemble de tige de support (1a) et la seconde liaison de came (7b) du deuxième ensemble de tige de support voisin (1b) sont agencées de manière à pivoter au moins partiellement autour de ladite broche de liaison (9), et
le premier ensemble de tige de support (1a) comprend également un ressort de torsion (3b) agencé de manière adjacente à un côté du premier agencement de couple de came (4a) qui est opposé au second agencement de couple de came (4b), dans lequel chaque jambe respective du ressort de torsion (3b) interagit avec la tige de support de l'au moins un deuxième ensemble de tige de support voisins (1b) ou la broche de liaison (9).

2. Ensemble de support d'affichage (8) selon la revendication 1, dans lequel au moins l'un desdits agencements de couple de came (4a, 4b) comprend deux éléments de couple de came (6) agencés de manière adjacente à une extrémité (5a, 5b) de ladite tige de support (2).

3. Ensemble de support d'affichage (8) selon la revendication 1 ou 2, dans lequel ledit moyen de ressort (3) comprend un ressort hélicoïdal se prolongeant entre ledit premier agencement de couple de came (4a) et ledit second agencement de couple de came (4b).

4. Ensemble de support d'affichage (8) selon la revendication 2, dans lequel ledit moyen de ressort (3) comprend un ressort hélicoïdal se prolongeant entre lesdits deux éléments de couple de came (6).

5. Ensemble de tige de support (1) selon la revendication 1, dans lequel ledit moyen de ressort (3) est agencé de manière adjacente à un côté dudit premier agencement de couple de came (4a) qui est opposé audit second agencement de couple de came (4b).

6. Ensemble de tige de support (1) selon l'une quelconque des revendications précédentes, dans lequel ladite première liaison de came (7a) et ladite seconde liaison de came (7b) d'un élément de couple de came (6) sont agencées pour pivoter au moins partiellement autour de ladite tige de support (2).

7. Ensemble de support d'affichage (8) selon l'une quelconque des revendications précédentes, dans lequel au moins une d'une première liaison de came (7a) du premier ensemble de tige de support (1a) s'interconnecte avec une première liaison de came (7a) du deuxième ensemble de tige de support voisin (1b), et une seconde liaison de came (7b) du premier ensemble de tige de support (1a) s'interconnecte avec une seconde liaison de came (7b) d'un troisième ensemble de tige de support voisin (1c), au moyen d'un élément de butée (10) faisant saillie à partir de l'une desdites liaisons de came (7a, 7b) dudit premier ensemble de tige de support (1a), une extrémité libre dudit élément de butée (10) venant en butée contre un extérieur de l'une desdites liaisons de came (7a, 7b) dudit deuxième ensemble de tige de support voisin (1b) ou dudit troisième ensemble de tige de support voisin (1c).

8. Dispositif électronique pliable (11) comprenant au moins une première section de cadre (12a) et une seconde section de cadre (12b) interconnectées de sorte que ladite première section de cadre (12a) et ladite seconde section de cadre (12b) peuvent pivoter l'une par rapport à l'autre,
ladite seconde section de cadre (12b) étant superposée sur ladite première section de cadre (12a) lorsqu'elle est pivotée vers une position d'extrémité pliée (P1),
une face avant de ladite seconde section de cadre (12b) étant alignée avec une face avant de ladite première section de cadre (12a) lorsqu'elle est pivotée vers une position d'extrémité étendue (P2),
un affichage (13) fixé auxdites faces avant desdites sections de cadre (12a, 12b), et
un ensemble de support d'affichage (8) selon l'une quelconque des revendications 1 à 7 étant agencé entre ladite première section de cadre (12a) et ladite seconde section de cadre (12b), des tiges de support (2) dudit ensemble de support d'affichage (8) supportant ledit affichage (13).

9. Dispositif électronique pliable selon la revendication 8, dans lequel chaque ensemble de tige de support (1) comprend une première liaison de came (7a) et une seconde liaison de came (7b), et une broche de liaison (9) interconnecte une première liaison de came (7a) d'un premier ensemble de tige de support (1a) avec une seconde liaison de came (7b) d'un deuxième ensemble de tige de support (1b), ladite broche de liaison (9) étant agencée de sorte qu'un axe central de ladite tige de support (2) soit toujours plus proche dudit affichage (13) qu'un axe central de ladite broche de liaison (9).

10. Dispositif électronique pliable selon la revendication 8 ou 9, dans lequel des agencements de couple de came (4a, 4b) d'ensembles de tige de support voisins (1a, 1b) sont adaptés pour maintenir ladite seconde section de cadre (12b) dans ladite position d'extrémité étendue (P2).

11. Dispositif électronique pliable selon l'une quelconque des revendication 8 à 10, dans lequel des agencements de couple de came (4a, 4b) d'ensembles de tige de support voisins (1a, 1b) sont adaptés pour maintenir ladite seconde section de cadre (12b) dans ladite position d'extrémité pliée (P1).

12. Dispositif électronique pliable selon l'une quelconque des revendications 8 à 11, dans lequel une section de cadre (12a, 12b) comprend également un élément de verrouillage (14) adapté pour maintenir ladite seconde section de cadre (12b) dans ladite position d'extrémité pliée (P1).
